# EUROPEAN PATENT APPLICATION

(11) **EP 4 646 007 A1**
(43) Date of publication of application: **05.11.2025**
(21) Application number: 24797278.9
(22) Date of filing: 19.03.2024
(51) Int. Cl.: H04W 74/08, H04L 5/00, H04W 72/04, H04W 72/23, H04W 74/00, H04W 76/18, H04W 72/12

(54) **METHOD AND APPARATUS FOR ALLEVIATING COMMUNICATION INTERRUPTION BY USING SUL IN WIRELESS COMMUNICATION SYSTEM**

(30) Priority: 27.04.2023 KR 20230055825; 12.05.2023 KR 20230061742
(71) Applicant: Samsung Electronics Co., Ltd., Suwon-si, Gyeonggi-do 16677 (KR)
(72) Inventor: NGUYEN, Trung Hieu, Hanoi, 124000 (VN); NGUYEN, Van Hung, Hanoi, 124000 (VN); NGUYEN, The Thoi, Hanoi, 124000 (VN); NGUYEN, Van Thinh, Hanoi, 124000 (VN)
(74) Representative: Nederlandsch Octrooibureau
(86) International application number: PCT/KR2024/003405
(87) International publication number: WO 2024/225616

(57) **Abstract**

A method for enhancing communication interruption by using SUL in a wireless communication system includes: registering a user terminal at a cell by using a NUL carrier; receiving configuration information of a SUL carrier from the cell; identifying whether uplink configuration information on the NUL carrier is not received for a predetermined period time; when the uplink configuration information on the NUL carrier is not received for the predetermined period time, setting the SUL carrier to be used as an uplink carrier; and performing a RACH procedure by using the SUL carrier. Various other embodiments understood through the disclosure are possible.

## Description

### [Technical Field]

The disclosure relates to a method and an apparatus for enhancing communication interruption by using supplementary uplink (SUL) in a wireless communication system.

### [Background Art]

5G mobile communication technology defines a broad frequency band so as to enable a high transmission speed and new service, and may be implemented not only in a frequency band of 6 GHz or less such as 3.5 gigahertz (3.5 GHz) but also in a superhigh frequency band ('Above 6 GHz') which is called millimeter wave (mmWave) such as 28 GHz and 39 GHz. In addition, in the case of 6G mobile communication technology which is called a system of 'beyond 5G', it is considered that 6G mobile communication technology is implemented in a terahertz (THz) band (for example, 3 terahertz band at 95 GHz) in order to achieve a transmission speed 50 times faster than in 5G mobile communication technology and ultra-low latency that is reduced by 1/10 compared to 5G mobile communication technology.

At the early stage of 5G mobile communication technology, with the aim of supporting service for enhanced mobile broadband (eMBB), ultra-reliable low-latency communications (URLLC), massive machine-type communications (mMTC) and satisfying performance requirements, standards were defined for beamforming and massive MIMO for mitigating a path loss in propagation in an ultra-high frequency band and increasing a transmission distance in propagation, support of various numerologies for effective use of ultra-high frequency resources (management of a plurality of sub-carrier spacings, etc.), and dynamic management of a slot format, initial access technology for supporting multi-beam transmission and broadband, definition and management of a bandwidth part, new channel coding method such as low density parity check (LDPC) encoding for high-capacity data transmission and a polar code for transmitting control information with high reliability, L2 pre-processing, network slicing for providing a dedicated network which is specialized for a specific service.

Currently, considering services that 5G mobile communication technology supports, discussions are ongoing on improvement of 5G mobile communication technology at the early stage and performance enhancement, and physical layer standardization is underway for various technologies, such as vehicle-to-everything (V2X) for assisting in determining traveling of an autonomous vehicle based on a location and state information that a vehicle transmits, and enhancing user convenience, new radio unlicensed (NR-U) for operating a system according to requirements on various regulations in an unlicensed band, NR terminal low-power consumption technology (UE-power saving), a non-terrestrial network (NTN) which is terminal-satellite direction communication for ensuring a coverage in a region where communication with a terrestrial network is impossible, positioning, etc.

In addition, standardization in the wireless interface architecture/protocol field regarding technologies, such as industrial Internet of Things (IIoT) for supporting new service through association and merging with other industries, integrated access and backhaul (IAB) for supporting integration of wireless backhaul link and access link and providing a node for expanding a network service region, mobility enhancement including conditional handover and dual active protocol stack (DAPS) handover, 2-step RACH for NR for simplifying a random access procedure, is underway. Standardization in the field of system architecture/service for a 5G baseline architecture (for example, a service-based architecture, a service-based interface) for integrating network functions virtualization (NVF) and software-defined networking (SDN), mobile edge computing (MEC) for receiving service based on a position of UE is in progress.

As 5G mobile communication systems described above are commercialized, connected devices which are explosively increasing may be connected to a communication network, and accordingly, it is expected that enhancing functions and performance of a 5G mobile communication system, and integrated management of connected devices will be necessary. To achieve this, new researches on extended reality (XR) for efficiently supporting augmented reality (AR), virtual reality (VR), mixed reality (MR), etc., enhancement of 5G performance and reduction of complexity by using artificial intelligence (AI) and machine learning (ML), AI service support, metaverse service support, drone communication, etc. will be conducted.

In addition, the development of such 5G mobile communication systems may become the basis for the development of multi-antenna transmission technology such as new waveform for guaranteeing a coverage in a terra-hertz band of 6G mobile communication technology, full dimensional MIMO (FD-MIMO), array antenna, large scale antenna, high-dimensional space multiplexing technology using a metamaterial-based lens and an antenna, orbital angular momentum for enhancing a coverage of a terra-hertz band signal, reconfigurable intelligent surface (RIS) technology, as well as full duplex technology for improving frequency efficiency and enhancing system network of 6G mobile communication technology, AI-based communication technology which utilizes a satellite, artificial intelligence (AI) at the step of designing, and internalizes end-to-end AI support function to realize system optimization, next-generation distributed computing technology for realizing service of complexity beyond the limitation to UE operating capability by using high-performance communication and computing resources.

Since transmit power of user equipment (UE) in a wireless communication system is not stronger than transmit power of a base station (next generation nodeB, gNB), a cell coverage of uplink (UL) may be smaller than downlink (DL). Degradation of performance of uplink caused by such a difference may become more serious as UE is closer to an edge of a cell. To solve this problem, supplementary uplink (SUL) which has a frequency lower than a frequency of normal uplink (NUL) may be used, considering that a cell coverage increases as a frequency decreases. For example, when a channel condition of a network is good, the network may request a user terminal to use NUL, and, when the channel condition of the network does not satisfy a designated condition, the network may request the user terminal to use SUL.

### [Disclosure of Invention]

### [Solution to Problem]

According to various embodiments of the disclosure, a method for enhancing communication interruption by using SUL in a wireless communication system may include: registering a user terminal at a cell by using a NUL carrier; receiving configuration information of a SUL carrier from the cell; identifying whether uplink configuration information on the NUL carrier is not received for a predetermined period time; when the uplink configuration information on the NUL carrier is not received for the predetermined period time, setting the SUL carrier to be used as an uplink carrier; and performing a RACH procedure by using the SUL carrier.

In addition, according to various embodiments of the disclosure, a method for enhancing communication interruption by using SUL in a wireless communication system may include: performing a data transaction through an LTE path and a 5G path; identifying whether uplink configuration information on a NUL carrier is not received through the 5G path for a predetermined period time; when the uplink configuration information on the NUL carrier is not received through the 5G path for the predetermined period time, setting a SUL carrier to be used as an uplink carrier, based on configuration information of the SUL carrier which is received from a 5G serving cell; and performing a RACH procedure by using the SUL carrier.

In addition, according to various embodiments of the disclosure, an apparatus for enhancing communication interruption by using supplementary uplink (SUL) in a wireless communication system may include: a transceiver; and at least one processor operatively connected with the transceiver. The at least one processor may register a user terminal at a cell by using a NUL carrier, may receive configuration information of a SUL carrier from the cell, may identify whether uplink configuration information on the NUL carrier is not received for a predetermined period time, when the uplink configuration information on the NUL carrier is not received for the predetermined period time, may set the SUL carrier to be used as an uplink carrier, and may perform a RACH procedure by using the SUL carrier.

In addition, according to various embodiments of the disclosure, an apparatus for enhancing communication interruption by using SUL in a wireless communication system may include: a transceiver; and at least one processor operatively connected with the transceiver. The at least one processor may perform a data transaction through an LTE path and a 5G path, may identify whether uplink configuration information on a NUL carrier is not received through the 5G path for a predetermined period time, when the uplink configuration information on the NUL carrier is not received through the 5G path for the predetermined period time, may set a SUL carrier to be used as an uplink carrier, based on configuration information of the SUL carrier which is received from a 5G serving cell, and may perform a RACH procedure by using the SUL carrier.

### [Brief Description of Drawings]

FIG. 1 is a block diagram of an electronic device in a network environment according to various embodiments;
FIG. 2 is a block diagram of an electronic device which supports legacy network communication and 5G network communication according to various embodiments;
FIG. 3 is a view illustrating an architecture of a network according to various embodiments;
FIG. 4 is a view illustrating a network slice according to various embodiments;
FIG. 5 is a view to explain a method for enhancing communication interruption by using SUL according to an embodiment of the disclosure;
FIG. 6 is a view to explain a method for registering at a cell to transmit data by using NUL according to an embodiment of the disclosure;
FIG. 7 is a view to explain configuration information of SUL according to an embodiment of the disclosure;
FIG. 8 is a view to explain a situation where configuration information of a physical uplink resource is not received and a downlink resource is received according to an embodiment of the disclosure.
FIG. 9 is a view to explain a method for performing a random access channel (RACH) procedure by using SUL according to an embodiment of the disclosure;
FIG. 10 is a view to explain a radio resource control (RRC) connection re-establishment procedure according to an embodiment of the disclosure;
FIG. 11 is a view to explain a method for enhancing communication interruption by using SUL in a non-standalone method according to an embodiment of the disclosure; and
FIG. 12 is a view to explain a method for enhancing communication interruption by using SUL disposed in an unlicensed band according to an embodiment of the disclosure.

Regarding explanation of the drawings, the same or similar reference numerals may be used for the same or similar components.

### [Mode for the Invention]

Hereinafter, various embodiments of the disclosure will be described with reference to the accompanying drawings. For the convenience of explanation, dimensions of components illustrated in the drawings may be exaggerated or reduced, and the disclosure is not limited by the illustration in the drawings.

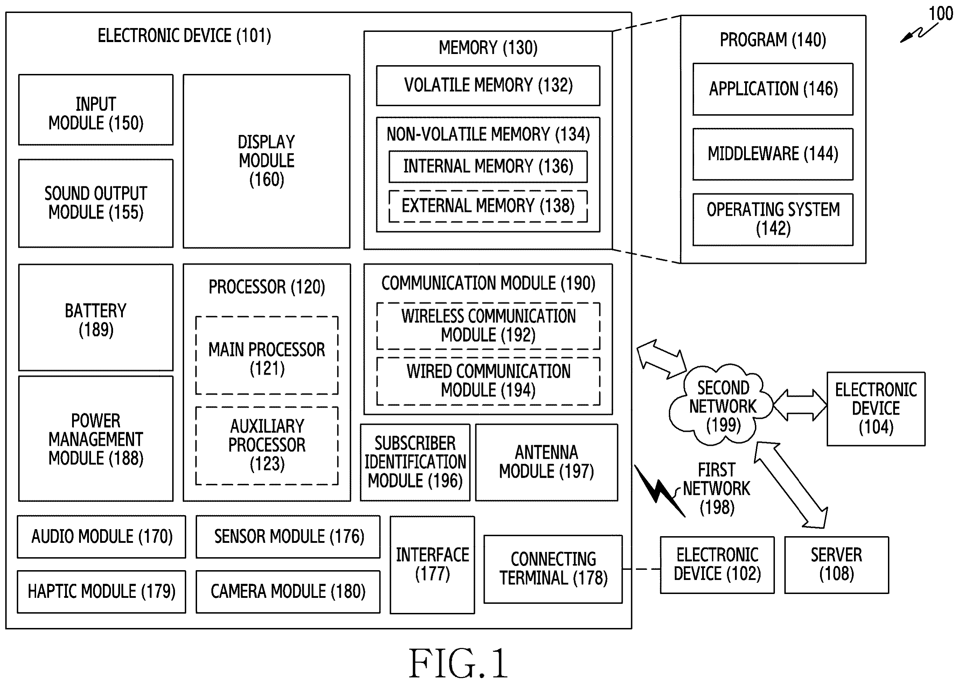

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mm Wave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

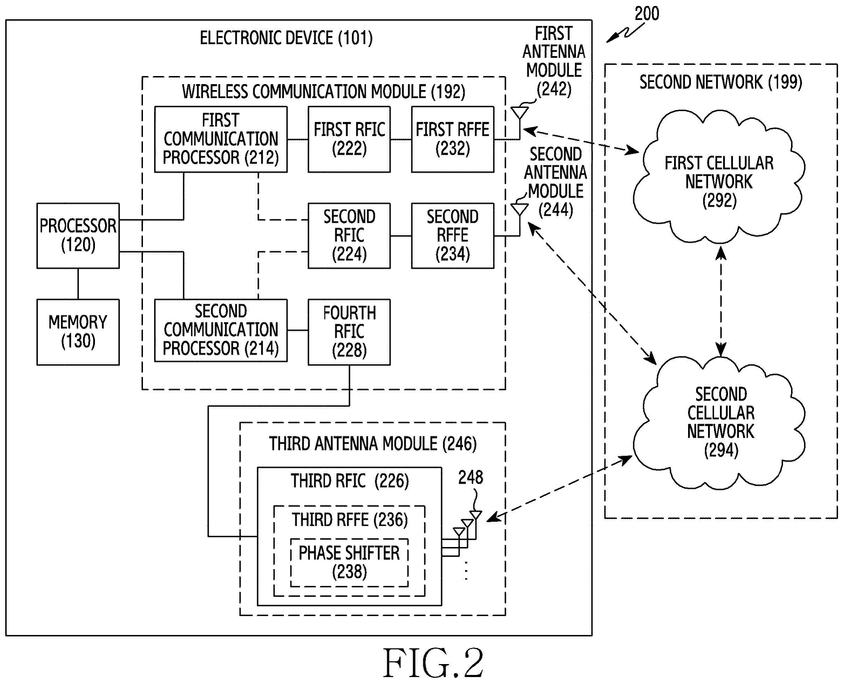

FIG. 2 is a block diagram 200 of an electronic device 101 for supporting legacy network communication and 5G network communication according to various embodiments. Referring to FIG. 2, the electronic device 101 may include a first communication processor (e.g., including processing circuitry) 212, a second communication processor (e.g., including processing circuitry) 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include a processor (e.g., including processing circuitry) 120 and a memory 130. A network 199 may include a first cellular network 292 and a second cellular network 294. According to an embodiment, the electronic device 101 may further include at least one of the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of a wireless communication module 192. According to an embodiment, the fourth RFIC 228 may be omitted or may be included as part of the third RFIC 226.

The first communication processor 212 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. For example, the first communication processor 212 may establish a communication channel of a band to be used for wireless communication with the first cellular network 292, and may support legacy network communication via the established communication channel. According to various embodiments, the first cellular network 292 may be a legacy network including a second generation (2G), 3G, 4G, or long term evolution (LTE) network.

The second communication processor 214 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. For example, the second communication processor 214 may establish a communication channel corresponding to a designated band (for example, about 6 GHz to about 60 GHz) among bands to be used for wireless communication with the second cellular network 294, and may support 5G network communication via the established communication channel. According to various embodiments, the second cellular network 294 may be a 5G network which is defined in 3GPP. Additionally, according to an embodiment, the first communication processor 212 or the second communication processor 214 may establish a communication channel corresponding to another designated band (for example, about 6 GHz or lower) among the bands to be used for wireless communication with the second cellular network 294, and may support 5G network communication via the established communication channel. According to an embodiment, the first communication processor 212 and the second communication processor 214 may be implemented within a single chip or a single package. According to various embodiments, the first communication processor 212 or the second communication processor 214 may be formed within a single chip or a single package, with the processor 120, the auxiliary processor 123, or the communication module 190.

When transmitting signals, the first RFIC 222 may convert a baseband signal, which is generated by the first communication processor 212, into a radio frequency (RF) signal of about 700 MHz to about 3 GHz to be used in the first cellular network 292 (for example, a legacy network). When signals are received, an RF signal may be acquired from the first cellular network 292 (for example, the legacy network) via an antenna (for example, the first antenna module 242), and may be pre-processed through an RFFE (for example, the first RFFE 232). The first RFIC 222 may convert the pre-processed RF signal into a baseband signal to be processed by the first communication processor 212.

When transmitting signals, the second RFIC 224 may convert a baseband signal, which is generated by the first communication processor 212 or the second communication processor 214, into an RF signal (hereinafter, a 5G Sub6 RF signal) of a Sub6 band (for example, about 6 GHz or lower) to be used in the second cellular network 294 (for example, a 5G network). When signals are received, a 5G Sub6 RF signal may be acquired from the second cellular network 294 (for example, the 5G network) via an antenna (for example, the second antenna module 244), and may be pre-processed through an RFFE (for example, the second RFFE 234). The second RFIC 224 may convert the pre-processed 5G Sub6 RF signal into a baseband signal to be processed by a corresponding communication processor among the first communication processor 212 or the second communication processor 214.

The third RFIC 226 may convert a baseband signal, which is generated by the second communication processor 214, into an RF signal (hereinafter, a 5G Above6 RF signal) of a 5G Above6 band (for example, about 6 GHz to about 60 GHz) to be used in the second cellular network 294 (for example, the 5G network). When signals are received, a 5G Above6 RF signal may be acquired from the second cellular network 294 (for example, the 5G network) via an antenna (for example, the antenna 248), and may be pre-processed through the third RFFE 236. The third RFIC 226 may convert the pre-processed 5G Above6 RF signal into a baseband signal to be processed by the second communication processor 214. According to an embodiment, the third RFFE 236 may be formed as part of the third RFIC 226.

According to an embodiment, the electronic device 101 may include the fourth RFIC 228 separately from or as part of the third RFIC 226. In this case, the fourth RFIC 228 may convert a baseband signal, which is generated by the second communication processor 214, into an RF signal of an intermediate frequency band (for example, about 9 GHz to about 11 GHz) (hereinafter, an IF signal), and then may transfer the IF signal to the third RFIC 226. The third RFIC 226 may convert the IF signal into a 5G Above6 RF signal. When signals are received, a 5G Above6 RF signal may be received from the second cellular network 294 (for example, the 5G network) via an antenna (for example, the antenna 248), and may be converted into an IF signal by the third RFIC 226. The fourth RFIC 228 may convert the IF signal into a baseband signal to be processed by the second communication processor 214.

According to an embodiment, the first RFIC 222 and the second RFIC 224 may be implemented as part of a single chip or single package. According to an embodiment, the first RFFE 232 and the second RFFE 234 may be implemented as part of a single chip or a single package. According to an embodiment, at least one antenna module of the first antenna module 242 or the second antenna module 244 may be omitted, or may be coupled with another antenna module to process RF signals of a plurality of corresponding frequency bands.

According to an embodiment, the third RFIC 226 and the antenna 248 may be disposed on the same substrate to form a third antenna module 246. For example, the wireless communication module 192 or the processor 120 may be disposed on a first substrate (for example, a main PCB). In this case, the third antenna module 246 may be formed by the third RFIC 226 being disposed on an area (for example, a lower surface) of a second substrate (for example, a sub PCB) separate from the first substrate, and the antenna 248 being disposed on another area (for example, an upper surface). The third RFIC 226 and the antenna 248 may be disposed on the same substrate, so that a length of a transmission line therebetween may be reduced. This may reduce loss (for example, attenuation) of a signal of a high frequency band (for example, about 6 GHz to about 60 GHz) used for 5G network communication, which is caused by a transmission line. Accordingly, the electronic device 101 may enhance quality or speed of communication with the second cellular network 294 (for example, the 5G network).

According to an embodiment, the antenna 248 may be formed as an antenna array including a plurality of antenna elements to be used for beamforming. In this case, the third RFIC 226 may include a plurality of phase shifters 238 corresponding to the plurality of antenna elements, as part of the third RFFE 236. When transmitting signals, the plurality of phase shifters 238 may shift phases of 5G Above6 RF signals to be transmitted to the outside (for example, a base station of the 5G network) of the electronic device 101 via corresponding antenna elements. When receiving signals, the plurality of phase shifters 238 may shift phases of 5G Above6 RF signals received from the outside through corresponding antenna elements to the same phases or substantially the same phases. This makes it possible to transmit or receive through beamforming between the electronic device 101 and the outside.

The second cellular network 294 (for example, the 5G network) may be operated independently from the first cellular network 292 (for example, the legacy network) (for example, stand-alone (SA)), or may be operated in conjunction therewith (for example, non-stand alone (NSA)). For example, the 5G network may include only an access network (for example, a 5G radio access network (RAN) or a next generation RAN (NG RAN)), and may not include a core network (for example, a next generation core (NGC)). In this case, after accessing the access network of the 5G network, the electronic device 101 may access an external network (for example, Internet) under control of the core network (for example, an evolved packed core (EPC)) of the legacy network. Protocol information (for example, LTE protocol information) for communication with the legacy network or protocol information (for example, new radio (NR) protocol information) for communication with the 5G network may be stored in the memory 230, and may be accessed by other components (for example, the processor 120, the first communication processor 212, or the second communication processor 214).

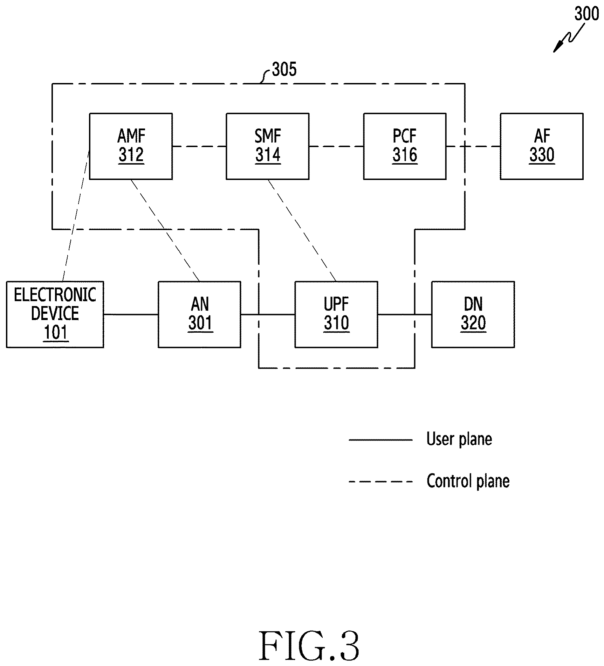

FIG. 3 illustrates an architecture of a network according to various embodiments.

Referring to FIG. 3, a network environment 300 may include an electronic device 101 (for example, the electronic device 101 of FIG. 1) and a 5G network (for example, the second cellular network 294 of FIG. 2) which is defined by 3GPP. For example, functions, structures, or arrangements of the components illustrated in FIG. 3 may be implemented by referring to TS 23.501. Each of the components included in the network environment 300 may refer to a physical entity unit, or may refer to software or a module unit for performing an individual function. In the network environment 300, a user plane may refer to a path for transmitting and receiving data packets which are required by a user of the electronic device 101 to receive a service, and a control plane may refer to a path for transmitting and receiving a control signal for connecting, managing, or disconnecting a network used for transmission of data packets.

According to an embodiment, the electronic device 101 may refer to a device that is used by a user. The electronic device 101 may refer to, for example, a terminal, user equipment (UE), a mobile station, a subscriber station, a remote terminal, a wireless terminal, or a user device.

According to an embodiment, an access network (AN) 301 may provide a channel for wireless communication with the electronic device 101. The AN 301 may refer to a radio access network (RAN), a base station, an eNodeB (eNB), a 5G node, a transmission/reception point (TRP), or a 5^{th} generation NodeB (5GNB).

According to an embodiment, a data network (DN) 320 may provide a service (for example, an Internet service, an IP multimedia subsystem (IMS) service) by transmitting and receiving data (or data packets) to and from the electronic device 101 through a core network (CN) 305 and the AN 301.

According to an embodiment, the CN 305 may include a user plane function (UPF) node 310, an access & mobility management function (AMF) node 312, a session management function (SMF) node 314, and a policy control function (PCF) node 316. Types and numbers of components included in the CN 305 are not limited to the example illustrated in FIG. 3, and at least one of the same components (for example, the UPF node) or other components (for example, a unified data management (UDM) node or a network function repository function (NRF) node of published Korean Patent Application No. 10-2020-0088013) may further be included or at least one component may be omitted.

According to an embodiment, the AMF node 312 and the SMF node 314 may perform the same function as the function of a mobility management entity (MME) in a 4G network, or may perform at least part of the MME function. For example, the AMF node 312 may manage information related to access authorization of the electronic device 101 to the CN 305 and mobility of the electronic device 101. The SMF node 312 may generate a session for transmitting data between the electronic device 101 and the DN 320 through the UPF node 310, and may control a UPF re-location to change a UPF node (for example, 310) connected with the electronic device 101.

According to an embodiment, the PCF node 316 may perform the same function as the policy control resource function (PCRF) in a 4G network or may perform at least part of the PCRF. For example, the PCF node 316 may determine a policy related to data transmission of the electronic device 101, based on information related to quality of service (QoS) or charging information.

According to an embodiment, the UPF node 310 may perform functions of a packet data network gateway (P-GW) and a serving gateway (S-GW) in a 4G network. For example, the UPF node 310 may perform a routing function to allow data to be transmitted and received between the electronic device 101 and the DN 320 on a user plane, and may perform an anchor function to allocate an Internet protocol (IP) address corresponding to the DN 320.

According to an embodiment, an application function (AF) node 330 may provide information related to QoS to the PCF node 316.

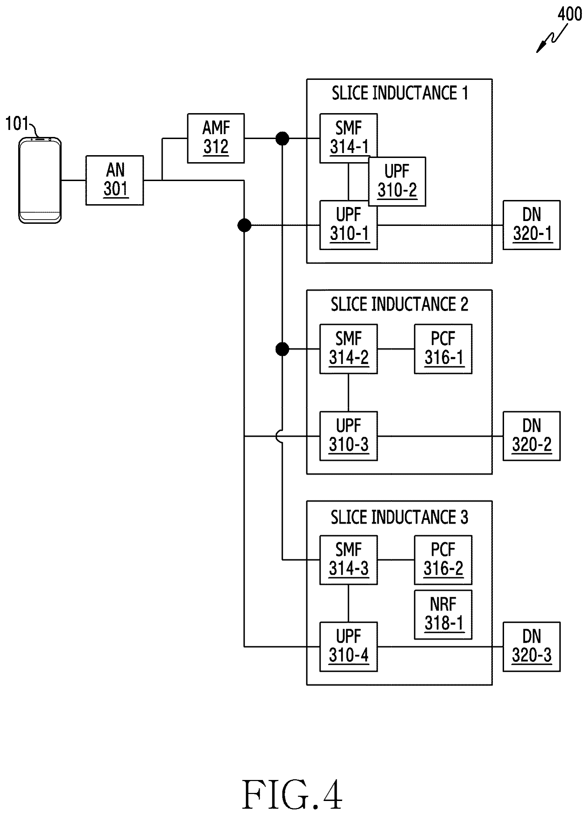

FIG. 4 illustrates a network slice according to various embodiments.

Referring to FIG. 4, in a network 400 (for example, the network environment 300 of FIG. 3), an AMF 312 may be connected to a plurality of network slices 1, 2, 3. In the disclosure, the network slice may be referred to as a network slice inductance or a slice inductance. FIG. 4 illustrates an example in which one AMF 312 is connected to an AN 301, but a plurality of AMFs may be connected to the AN 301.

According to an embodiment, at least part of the network slices 1, 2, 3 may include different components or may include a different number of components to provide different service types or service quality. For example, the network slice 1 connected to a DN 320-1 may include one SMF (for example, 314-1) and a plurality of UPFs (for example, 310-1, 310-2). In another example, the network slice 2 connected to a DN 320-2 may include one SMF (for example, 314-2), one UPF (for example, 310-3), and a PCF (for example, 316-1) connected to the SMF. In another example, the network slice 3 connected to a DN 320-3 may include one SMF (for example, 314-3), one UPF (for example, 310-4), a PCF (for example, 316-2) connected to the SMF, and an NRF (for example, 318-1).

A service type may include, for example, enhanced mobile broadband (eMBB), ultra-reliable and low latency communication (URLLC), or massive machine type communication (mMTC) which is defined in a 5G network. eMBB may refer to a network service that requires a high data transmission rate and low latency like a smartphone service. URLLC may refer to a network service that requires low latency and high reliability like a disaster safety communication network or vehicle to everything (V2X). mMTC may refer to a network service that interconnects a plurality of entities such as Internet of things (IoT) but does not require low latency. Service quality may include, for example, quality of service (QoS) such as a minimum bandwidth for data transmission, latency, or a maximum error rate.

According to an embodiment, the electronic device 101 may establish a packet data unit (PDU) session through a network slice that is determined according to requirement of a user or an application which is running in the electronic device 101.

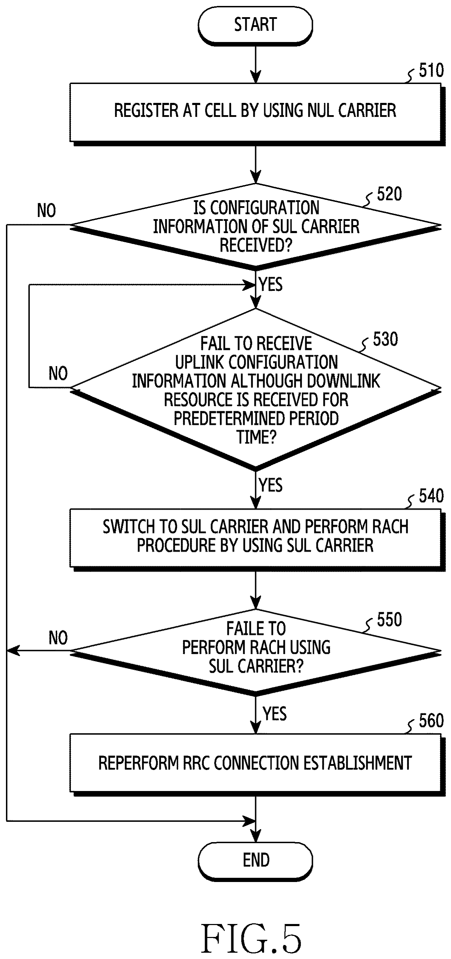

FIG. 5 is a view to explain a method for enhancing communication interruption by using supplementary uplink (SUL) according to an embodiment of the disclosure.

A user terminal may receive, from a cell (or a base station), configuration information (for example, a configuration parameter) of normal uplink (NUL) and supplementary uplink (SUL) carriers or resource, and a threshold value (for example, rsrp- ThresholdSSB-SUL) which is an uplink switching condition between NUL and SUL carriers. The user terminal may be registered at the cell by using the NUL carrier. In addition, when a strength of a signal transmitted through a NUL carrier does not exceed the threshold value in the middle of using the NUL carrier during a data transaction at the cell where the user terminal is registered, the user terminal may not receive configuration information of a physical uplink resource or uplink scheduling information. For example, uplink configuration information, for example, configuration information of a physical uplink resource or uplink scheduling information, may not be received in the NUL carrier for a predetermined period time. When the configuration information of the physical uplink carrier or resource or uplink scheduling information is not received for the predetermined period time, the data transaction may be delayed, influencing a specific application and/or service (for example, URLLC). In addition, when the predetermined period time for which the configuration information of the physical uplink carrier or resource or uplink scheduling information is not received lengthens, the user terminal may cause a reset action, which results in communication interruption.

To solve this, the disclosure suggests a method and an apparatus which, when configuration information of a physical uplink carrier or resource or uplink scheduling information is not received for a predetermined (or specified) period of time while a physical downlink resource is being received, set an uplink carrier to a SUL carrier (or switch from a NUL carrier to a SUL carrier), thereby enhancing communication interruption. Through the method and apparatus suggested above, an interruption at a user terminal may be removed during a data transaction, and a cell search time may be reduced, and a connection loss in a non-standalone method may be prevented and/or reduced.

NUL indicates an uplink channel that is used for transmitting data from a user terminal to a base station of a wireless network, and represents a basic uplink channel used for data transmission in a wireless network. On the other hand, SUL indicates an additional uplink channel that is used for providing more capacity for data transmission in a wireless network, and may use a lower frequency than a frequency of NUL.

Referring to FIG. 5, in operation 510, a user terminal may be registered at a cell by using a NUL carrier. In addition, the user terminal may perform a data transaction. For example, the user terminal may search a base station (or a cell), and may perform a RACH procedure by using the NUL carrier. Thereafter, the user terminal may perform a non-access stratum registration procedure. Through the registration procedure, the user terminal may be registered at the cell, and may be given an authority to access a network service.

In operation 520, the user terminal may identify whether configuration information (for example, a configuration parameter) of a SUL carrier or resource is received from a serving cell. For example, the user terminal may identify whether configuration information of a SUL carrier or resource has been previously received from a serving cell. When the configuration information of the SUL carrier or resource is not received (No in operation 520), the process may be finished.

When the configuration information of the SUL carrier or resource is received (Yes in operation 520), the user terminal may identify whether a physical downlink resource is received but configuration information of a physical uplink resource or uplink scheduling information is not received for a predetermined (or specified) period of time in operation 530. For example, the user terminal may monitor a physical downlink control channel (PDCCH) search space and may decode downlink control information (DCI) for scheduling uplink transmission. When the DCI is not received or the DCI is not decoded, configuration information of a physical uplink resource or uplink scheduling information may not be received. For example, when there is no DCI to be decoded, this may indicate the absence of configuration information of an uplink resource or uplink scheduling information. In this case, the situation where a downlink resource is received but configuration information of a physical uplink resource or uplink scheduling information is not received may continue for the predetermined period time.

When a physical downlink resource and a physical uplink resource are received (No in operation 530), operation 530 may be performed again. For example, the user terminal may continue monitoring a condition for occurrence of communication interruption.

When a physical downlink resource is received but configuration information of a physical uplink resource or uplink scheduling information is not received for the predetermined period time (Yes in operation 530), the user terminal may set an uplink carrier to a SUL carrier (or switch from a NUL carrier to a SUL carrier), and may perform a RACH procedure by using the SUL carrier in operation 540. In operation 550, the user terminal may identify whether RACH using the SUL carrier fails. For example, when transmission and reception of at least one of messages between the user terminal and the base station fails while the RACH procedure is being performed by using the SUL carrier, the user terminal may determine that the RACH procedure fails.

When RACH using the SUL carrier succeeds (No in operation 550), the process may be finished.

When RACH using the SUL carrier fails (Yes in operation 550), the user terminal may reestablish a RRC connection in operation 560. For example, when the RACH procedure using the SUL carrier fails, the user terminal may perform a RRC connection re-establishment (RRE) procedure. The RRE procedure may be performed to reestablish a RRC connection which has been previously established between the user terminal and the network. When the RRE procedure starts, the user terminal may transmit a RRC connection reestablishment request message to the network, and the network may respond with a RRC connection reestablishment response message including information that is necessary for the user terminal to reestablish a connection. The RRE procedure may be needed to maintain continuity of a RRC connection between the user terminal and the network in case connection is disconnected for a tentative reason.

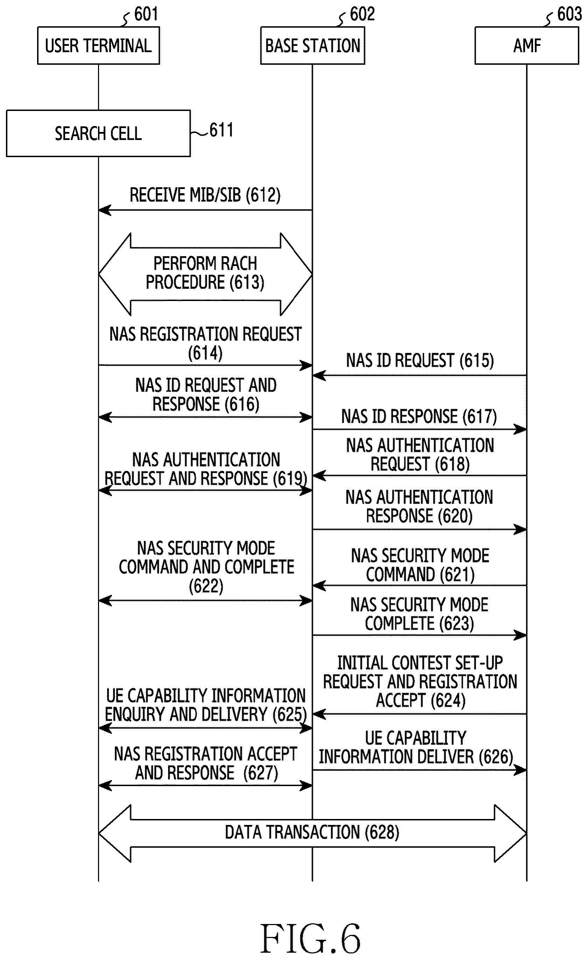

FIG. 6 is a view to explain a method for registering at a cell to transmit data by using NUL according to an embodiment of the disclosure.

Referring to FIG. 6, in operation 611, a user terminal 601 may search a base station (or a cell) 602.

In operation 612, the user terminal 601 may receive a master information block (MIB) and a system information block (SIB) from a base station 602. The MIB and the SIB may be used for delivering system information which is necessary for the user terminal 601 to access a network and to establish a connection with the base station 602. The MIB may be transmitted through a physical broadcast channel (PBCH), and may provide basic information regarding a physical layer configuration of a cell such as a bandwidth, a sub carrier spacing, a system frame number, etc. In addition, the SIB may deliver more detailed system information, and may be transmitted through a physical downlink shared channel (PDSCH), and may include information such as a cell ID, a radio resource configuration, scheduling information, and a mobility parameter.

In operation 613, the user terminal 601 and the base station 602 may perform a RACH procedure by using a NUL carrier. The random access channel (RACH) procedure may be performed to establish a connection between the user terminal 601 and the base station 602 in a wireless communication network. When the user terminal 601 selects a random access preamble from a pre-defined preamble set and transmits the random access preamble through a RACH channel in the RACH procedure, the base station 602 may receive the preamble and may transmit a random access response (RAR) message including a temporary identifier for the user terminal 601 to the user terminal 601. In addition, the user terminal 601 may access the network by using the temporary identifier, and may transmit a data or service request. In addition, the base station 602 may grant a corresponding request, and may allocate a dedicated channel to the user terminal 601 for the purpose of a data transaction.

The user terminal 601 may perform a non-access stratum (NAS) registration procedure. The NAS may be a function stratum for processing signal and mobility management between the user terminal 601 and a core network in a wireless communication network. The NAS may perform a role of providing the user terminal 601 with a service such as authentication, security, session management, and mobility management. The authentication service may perform mutual authentication between the user terminal 601 and the core network to guarantee IDs of the user terminal 601 and the network. The security service may encrypt and decrypt data transmitted through a wireless interface, and may establish security communication between the user terminal 601 and the core network. The session management service may include session establishment, correction, and release, and may manage signal and data sessions between the user terminal 601 and the core network. The mobility management service may include location management, handover management, and roaming management and may process movement of the user terminal 601 between different cells and an access network.

In operation 614, the user terminal 601 may transmit a NAS registration request to the base station 602.

In operation 615, an AMF 603 may transmit a NAS identity (ID) request to the base station 602. The base station 602 which receives the NAS ID request may deliver the NAS ID request to the user terminal 601 and may receive a NAS ID response from the user terminal 601 in operation 616. In addition, the base station 602 may deliver the NAS ID response to the AMF 613 in operation 617.

In operation 618, the AMF 603 which receives the NAS ID response may transmit a NAS authentication request to the base station 602. In operation 619, the base station 602 which receives the NAS authentication request may deliver the NAS authentication request to the user terminal 601, and may receive a NAS authentication response from the user terminal 601. In addition, in operation 620, the base station 602 may deliver the NAS authentication response to the AMF 603. According to an embodiment, the base station 602 may respond to the NAS registration request by using a NAS authentication request message including a random challenge value. In this case, the user terminal 601 may calculate a response to a challenge by using an authentication and key agreement (AKA) algorithm which is transmitted back to the AMF 603 through the NAS authentication response message.

In operation 621, the AMF 603 which receives the NAS authentication response may transmit a NAS security mode command to the base station 602. In operation 622, the base station 602 which receives the NAS security mode command may deliver the NAS security mode command to the user terminal 601, and may receive a NAS security mode command complete from the user terminal 601. In addition, in operation 623, the base station 602 may deliver the NAS security mode command complete to the AMF 603. According to an embodiment, when NAS authentication succeeds, the AMF 603 may transmit, to the user terminal 601, a NAS security mode command message including a security parameter to be used for communication thereafter. The security parameter may be used for establishing a security communication channel between the user terminal 601 and the AMF 603.

In operation 624, the AMF 603 may transmit an initial context setup request and a registration accept to the base station 602. In operation 625, the base station 602 which receives the initial context setup request and the registration accept may transmit a UE capability enquiry to the user terminal 601, and may receive UE capability information from the user terminal 601. In addition, in operation 626, the base station 602 may deliver the UE capability information to the AMF 603. In addition, in operation 627, the base station 602 may transmit the NAS registration accept to the user terminal 601, and may receive a NAS registration accept response from the user terminal 601. According to an embodiment, when the capability of the user terminal 601 is accepted in the network, the AMF 603 may transmit a NAS registration accept message to the user terminal 601. The NAS registration accept message may include information such as a temporary ID of the user terminal 601, a network access mode, and an AMF address. When the user terminal 601 receives the NAS registration accept message, the user terminal 601 may be registered at the cell and may be given an authority to access a network service. In addition, the user terminal 601 may establish a session of a protocol data unit (PDU) with the AMF 603, and may perform a data transaction as in operation 628.

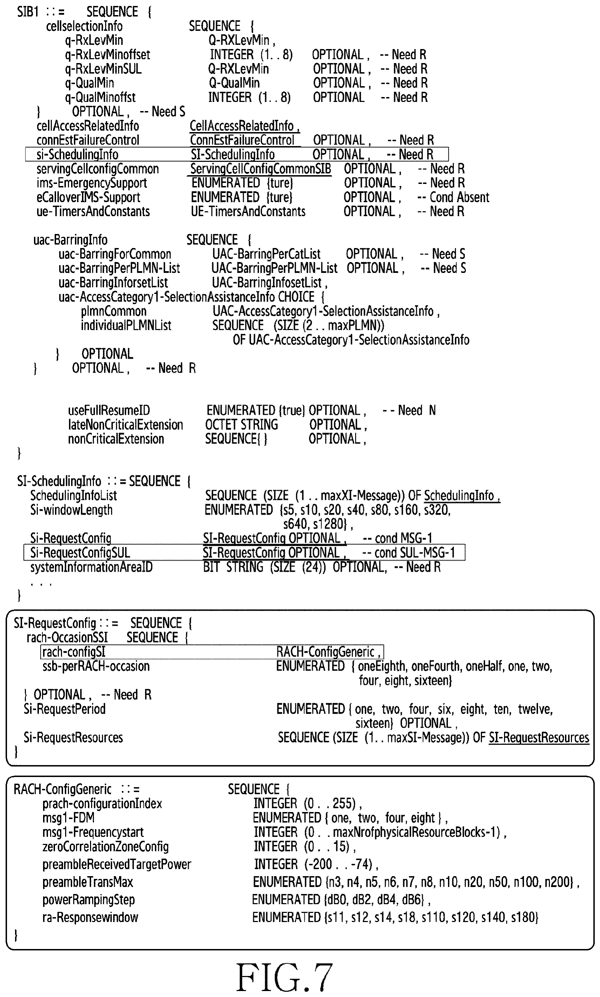

FIG. 7 is a view to explain configuration information of SUL according to an embodiment of the disclosure.

Referring to FIG. 7, a user terminal may receive configuration information (for example, a configuration parameter) of a SUL carrier or a resource from a serving cell. According to an embodiment, when the serving cell supports SUL, Msg 1 configuration information (e.g., SI-RequestConfigSUL) which is used for requesting a system information (SI) message by using a SUL carrier, and Msg 1 configuration information (e.g., SI-RequestConfig) which is used for SI-RequestConfigSUL to request a SI message by using a NUL carrier, may be included in information for acquiring SI (e.g., SI-SchedulingInfo), as shown in FIG. 7. In this case, SI-RequestConfigSUL may include configuration information of a dedicated RACH Occasion for SI (e.g., rach-OccasionSI), period set-up information for SI request (e.g., SI-RequestPeriod), and resource information for SI request (e.g. SI-RequestResource). SI-RequestPeriod may include RACH configuration information for SI (e.g., rach-ConfigSI) and information regarding the number of synchronisation signal blocks (SSBs) per RACH Occasion (e.g., ssb-perRACH-Occasion).

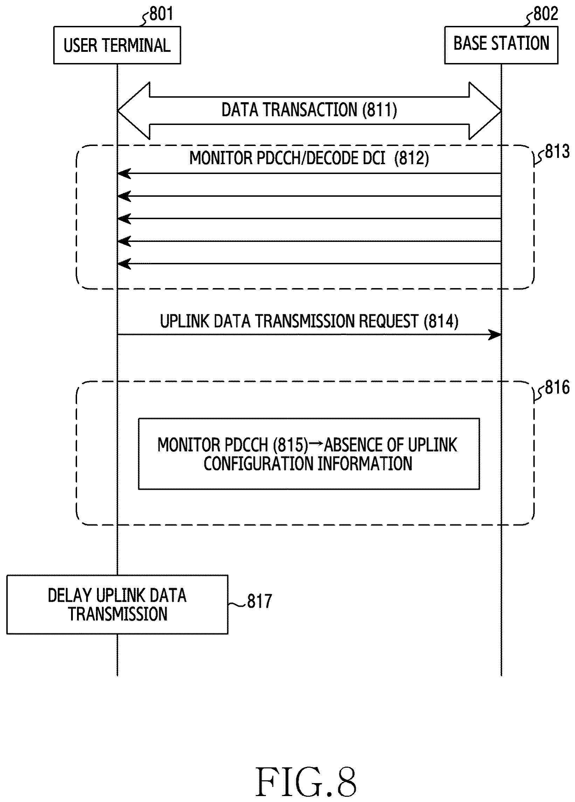

FIG. 8 is a view to explain a situation where configuration information of a physical uplink resource is not received and a downlink resource is received according to an embodiment of the disclosure.

Referring to FIG. 8, in operation 811, a user terminal 801 and a base station 802 may perform a data transaction.

In operation 812, the user terminal 801 may monitor a physical downlink control channel (PDCCH) search space and may decode downlink control information (DCI) for scheduling uplink transmission. The DCI may provide scheduling resource allocation (for example, an uplink physical resource block, a uplink modulation coding scheme, or a start symbol) for the user terminal 801 on a physical uplink shared channel (PUSCH) for uplink transmission. Operation 812 described above indicates that the user terminal 801 decodes the DCI in a normal condition 813.

When configuration information regarding a physical uplink resource or uplink scheduling information is not received or is not decoded (816), the user terminal 801 may trigger an uplink transmission request to the base station 802 (or cell) in operation 814. In this case, in operation 815, the user terminal 801 may monitor a PDCCH search space as in operation 812. However, when the DCI is not received or not decoded, configuration information of a physical uplink resource or uplink scheduling information may not be received. For example, when there is no DCI to be decoded, this may indicate the absence of configuration information of an uplink resource or uplink scheduling information. In this case, a downlink resource may be received. For example, a downlink resource may be received, but configuration information of an uplink resource or uplink scheduling information may not be received. According to an embodiment, the situation 816 in which a downlink resource is received but configuration information of a physical uplink resource or uplink scheduling information is not received may continue for a predetermined (or specified) period of time (for example, period time T).

In the situation where configuration information of a physical uplink resource or uplink scheduling information is absent for the predetermined period time, uplink data transmission may be delayed (deferred) (817). According to an embodiment, when the predetermined period time exceeds a designated period time (for example, when T exceeds a threshold value), a problem may arise in uplink transmission. For example, maximum retransmission of radio link control (RLC) may cause a wireless link failure.

According to an embodiment, identifying the predetermined period time (for example, identifying T) may vary according delay application requirement and distribution of software in a network. For example, in the case of a real time application, when a physical uplink resource is not continuously configured for a predetermined period time (for example, 6 ms) with reference to a designated delay time (for example, 10 ms), the user terminal 801 may switch an uplink operation from a NUL carrier to a SUL carrier to avoid interruption which may be caused by the absence of an uplink resource.

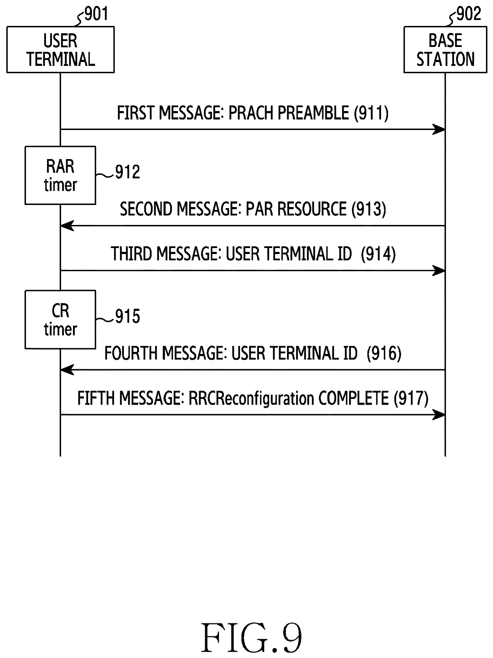

FIG. 9 is a view to explain a method for performing a random access channel (RACH) procedure by using SUL according to an embodiment of the disclosure.

Referring to FIG. 9, when a physical downlink resource is received but configuration information of a physical uplink resource or uplink scheduling information is not received for a predetermined (or specified) period of time, a user terminal 901 may switch an uplink operation from a NUL carrier to a SUL carrier. In addition, the user terminal 901 may perform a RACH procedure by using a SUL carrier. The RACH procedure may be the same as a RACH procedure when the user terminal 901 switches from a RRC idle state to a connected state.

The user terminal 901 may switch an uplink carrier from a NUL carrier to a SUL carrier and may transmit a physical random access channel (PRACH) preamble. For example, in operation 911, the user terminal 901 may transmit a first message to a base station (or a serving cell) 902. According to an embodiment, the first message may include a PRACH preamble including a random access-radio network temporary identifier (RA-RNTI). In this case, a random access response (RAR) timer 912 for estimating reception of a second message may start.

In operation 913, the base station 902 which receives the PRACH preamble may transmit a second message to the user terminal 901. According to an embodiment, the second message may include a RAR resource. The RAR resource may be used for the user terminal 901 to access a network and to establish a connection with the base station 902. According to an embodiment, the RAR resource may include a temporary cell-radio network temporary identifier (TC-RNTI), timing advance (TA), or an uplink (UL) grant. The TC-RNTI is a temporary identifier that is allocated to the user terminal 901 by the base station 902, and may be used for the user terminal 901 to access a network and to communicate with the base station 902. The TC-RNTI may be included in a RAR message and may be used for the user terminal 901 to identify the base station 902 and to establish a connection with the base station 902. The TA may be included in the RAR message and may be used for the user terminal 901 to adjust a transmission timing to match a timing of the base station 902. In addition, the TA may be used for compensating for a propagation delay between the user terminal 901 and the base station 902. The UL grant may include a grant for the user terminal 901 to transmit a third message to the base station 902. For example, the UL grant may designate a resource such as a time slot and a frequency band, which is used for the user terminal 901 to transmit the third message to the base station 902.

When a SUL carrier or resource is available, the user terminal 901 may transmit the third message to the base station 902 in operation 914. The third message may include an ID of the user terminal 901. According to an embodiment, the user terminal 901 may transmit the third message through a PUSCH. In this case, a contention resolution (CR) timer 915 may start. The CR timer 915 may be ended when the user terminal 901 receives a fourth message as in operation 916 or a contention resolution fails and time is expired. According to an embodiment, the CR timer 915 may start when the user terminal 901 transmits a random access preamble through a RACH and waits for a response of the base station 902. When the base station 902 transmits a RAR message to the user terminal 901 again before the CR timer 915 expires, the user terminal 901 may proceed with a contention resolution process including transmitting request for data or service and establishing a dedicated channel for exchanging data with the base station 902. When the CR timer 915 expires before the user terminal 901 receives the RAR message, the user terminal 901 may regard transmission as failing and may repeat the process by transmitting a new random access preamble through the RACH channel.

In operation 917, the user terminal 901 may transmit a fifth message. The fifth message may include rrcReconfigurationComplete. In this case, the user terminal 901 may determine that the RACH procedure using the SUL carrier or resource is successfully performed.

In operations 911 to 917 described above, when transmission and reception of at least one of the first message to fifth message fails, the user terminal 901 may determine that the RACH procedure using the SUL carrier or resource fails. For example, the user terminal 901 may transmit the first message and the RAR timer 912 may start. In addition, when the RAR timer 912 expires, the user terminal 901 may retransmit the first message until the number of times of transmitting the first message (transmission count) reaches a maximum value. In this case, the user terminal 901 may determine that the RACH procedure using the SUL carrier or resource fails. In another example, when the user terminal 901 successfully transmits the first message, a network (for example, the base station 902) may transmit the second message to the user terminal 901. In this case, when the user terminal 901 does not receive the second message, the network may retransmit the second message multiple times. However, when the user terminal 901 does not receive any information related to the second message, the user terminal 901 may determine that the RACH procedure using the SUL carrier or resource fails.

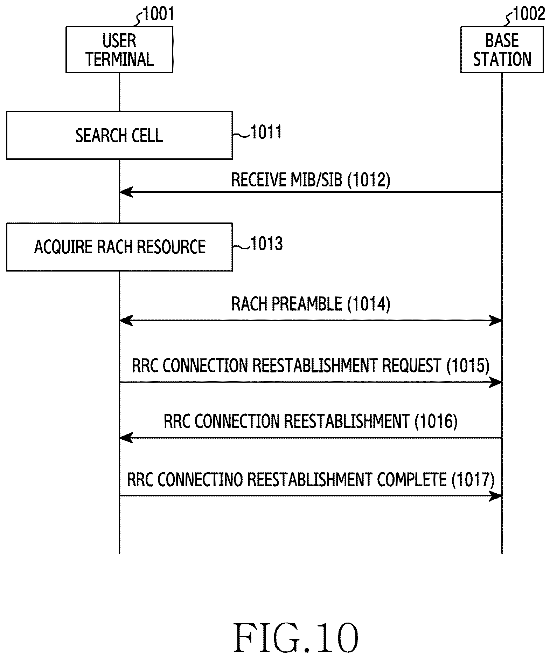

FIG. 10 is a view to explain a radio resource control (RRC) connection reestablishment procedure according to an embodiment of the disclosure.

The RRC connection may be a control plane protocol that is used in a cellular network to establish and maintain a connection between a user terminal 1001 and a network (for example, a base station 1002). For example, when power of the user terminal 1001 is turned on or the user terminal 1001 is moved to a new location, the user terminal 1001 should establish a connection with the network to make or receive a call, and to access a data service. A process for establishing this connection may be referred to as RRC connection establishment. While establishing the RRC connection, the user terminal 1001 may transmit a connection establishment request to the network, and the network may respond with information necessary for the user terminal 1001 to establish the connection. The RRC protocol may process radio resource negotiation and management between the user terminal 1001 and the network. For example, the RRC protocol may include selecting an appropriate radio access technique, allocating radio resources, and configuring a radio bearer. When the RRC connection is established, the user terminal 1001 may communicate with the network by using radio resources allocated to the RRC. In addition, the RRC protocol may provide a mechanism that allows the user terminal 1001 to release radio resources when the RRC protocol is not needed anymore such as when the user terminal 1001 moves out of a network range (or a cell coverage) or a user ends communication or data session.

Referring to FIG. 10, when a RACH procedure using a SUL carrier fails, the user terminal 1001 may perform a RRC connection reestablishment (RRE) procedure. The RRE procedure may be performed to reestablish a RRC connection that has been previously established between the user terminal 1001 and the network. When the RRE procedure starts, the user terminal 1001 may transmit a RRC connection reestablishment request (rrcReestablishmentRequest) message to the network. The message may include information regarding a previously established RRC connection, such as a cell ID, a used radio resource and a security parameter. In addition, the network may respond with a RRC connection reestablishment response message including information necessary for the user terminal 1001 to reestablish a connection. During the RRE procedure, the network and the user terminal 1001 may negotiate about a radio resource to be used for connection, and may exchange a message for configuring a radio bearer. Since much necessary information has been already exchanged during an initial connection, the RRE procedure may be performed faster than initial RRC connection establishment. The RRE procedure may be needed to maintain continuity of the RRC connection between the user terminal 1001 and the network when the connection is disconnected for a tentative reason. The RRC connection is rapidly reestablished, so that the user terminal 1001 may continuously use a service such as voice communication, a text message, a data service without interruption.

In the RRE procedure, the user terminal 1001 may search a cell (or the base station 1002) in operation 1011. In addition, the user terminal 1001 may perform synchronization with the detected cell.

In operation 1012, the user terminal 1001 may receive a MIB and a SIB. The MIB and the SIB may be used for delivering system information necessary for the user terminal 1001 to access a network and to establish a connection with the base station 1002.

The user terminal 1001 may perform a RACH procedure. In operation 1013, the user terminal 1001 may acquire a RACH resource. In addition, in operation 1014, the user terminal 1001 may transmit a RACH preamble to the base station 1002, and the base station 1002 may transmit a RACH response to the user terminal 1001.

Thereafter, in operation 1015, the user terminal 1001 may transmit a RRC connection reestablishment request (rrcReestablishmentRequst) message to the base station 1002. In operation 1016, the base station 1002 may transmit a RRC connection reestablishment (rrcReestablishment) message to the user terminal 1001. In addition, in operation 1017, the user terminal 1001 may transmit a RRC connection reestablishment complete (rrcReestablishmentComplete) message to the base station 1002, thereby completing the RRE procedure.

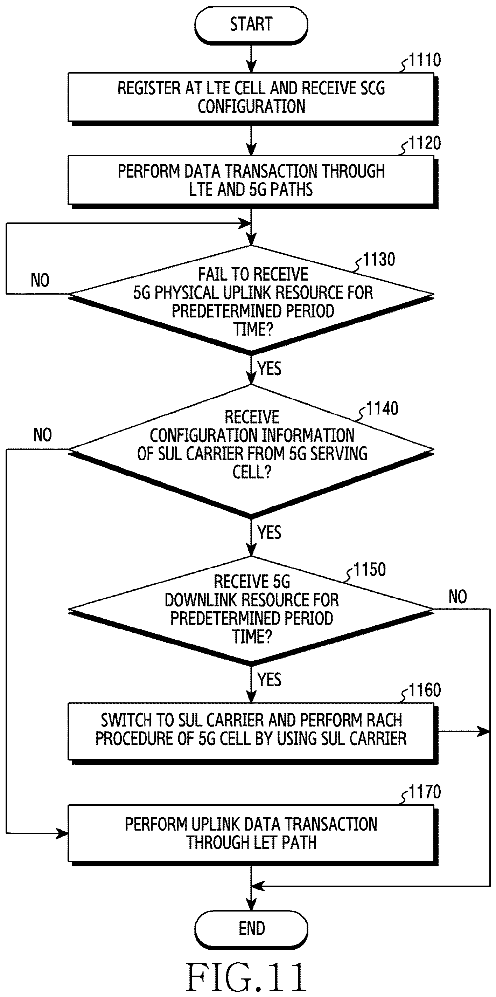

FIG. 11 is a view to explain a method for enhancing communication interruption by using SUL in a non-standalone (NSA) method according to an embodiment of the disclosure. The NSA method may be considered to compensate the defect that a coverage in which a service is provided by a base station (gNB) is reduced in a new radio (NR) system. The NSA method may be a method that uses an NR system along with an existing LTE system. In the NSA method, a user terminal may use not only eNB of an LTE system but also gNB of an NR system. In FIG. 11, a method for enhancing communication interruption by using SUL in such a NSA method will be described.

Referring to FIG. 11, in operation 1110, a user terminal may be registered at an LTE cell, and may receive a secondary cell group (SCG) configuration. The SCG may indicate a radio resource group that is used for a user terminal to communicate with a secondary cell. Herein, the secondary cell may indicate an additional cell that is configured to provide additional capacity and coverage to the user terminal, in addition to a primary cell that the user already communicates with.

In operation 1120, the user terminal may perform a data transaction through an LTE path and a 5G path. According to an embodiment, the user terminal may perform a data transaction only through the 5G path, or may perform a data transaction through all of the LTE path and the 5G path.

In operation 1130, the user terminal may identify whether configuration information of a 5G physical uplink resource is not received for a predetermined (or specified) period of time. For example, the user terminal may monitor a PDCCH search space and may decode DCI for scheduling uplink transmission. When the DCI is not received or not decoded, configuration information of a physical uplink resource or uplink scheduling information may not be received. For example, when there is no DCI to be decoded, this may indicate the absence of configuration information of an uplink resource or uplink scheduling information. Accordingly, when a strength of a signal transmitted through a NUL carrier does not exceed a threshold value during use of the NUL carrier while data transaction is being performed, the user terminal may not receive configuration information of a 5G physical uplink resource or uplink scheduling information.

When the configuration information of the 5G physical uplink resource or uplink scheduling information is received (No in operation 1130), operation 1130 may be performed again. For example, the user terminal may continuously monitor a condition for occurrence of communication interruption.

When the configuration information of the 5G physical uplink resource or uplink scheduling information is not received for the predetermined period time (Yes in operation 1130), the user terminal may identify whether configuration information (for example, a configuration parameter) of a SUL carrier or resource is received from a 5G serving cell in operation 1140. For example, the user terminal may identify whether configuration information of a SUL carrier or resource has been previously received from a 5G serving cell.

When the configuration information of the SUL carrier is not received (No in operation 1140), the user terminal may perform an uplink data transaction through the LTE path in operation 1170.

When the configuration information of the SUL carrier is received (Yes in operation 1140), the user terminal may identify whether a 5G physical downlink resource is received for the predetermined period time. When the 5G physical downlink resource is not received for the predetermined period time (No in operation 1150), the process may be finished.

When the 5G physical downlink resource is received for the predetermined period time (Yes in operation 1150), the user terminal may set an uplink carrier to a SUL carrier and may perform a RACH procedure for a 5G cell by using the SUL carrier in operation 1160.

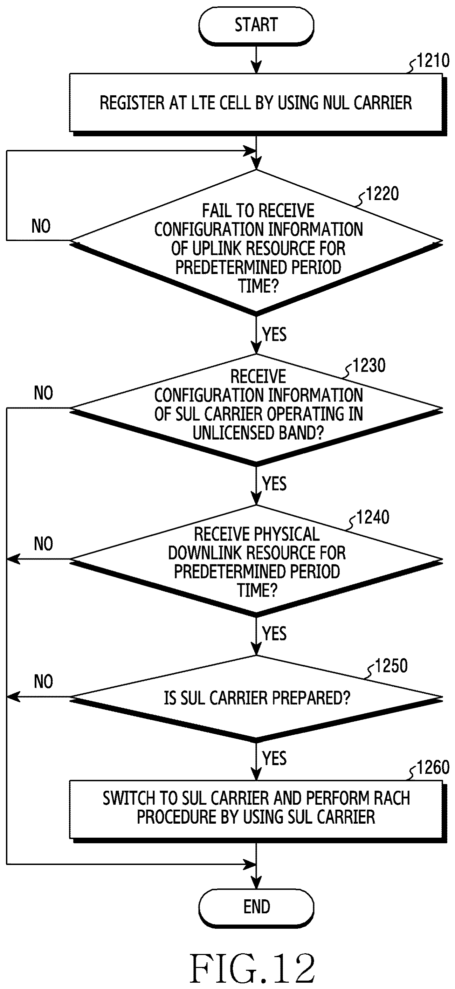

FIG. 12 is a view to explain a method for enhancing communication interruption by using SUL in an unlicensed band according to an embodiment of the disclosure. A SUL carrier may operate in an unlicensed band. A method for enhancing communication interruption by using a SUL disposed in an unlicensed band will be described with reference to FIG. 12.

Referring to FIG. 12, in operation 1210, a user terminal may be registered at a cell (or a base station) by using a NUL carrier. The user terminal may receive configuration of a NUL carrier and a SUL carrier from the cell. In this case, the SUL carrier may operate in an unlicensed band. In addition, the user terminal may perform a RACH procedure for the cell by using the NUL carrier.

In operation 1220, the user terminal may identify whether configuration information of a physical uplink resource or uplink scheduling information is not received for a predetermined (or specified) period of time. For example, the user terminal may monitor a PDCCH search space and may decode DCI for scheduling uplink transmission. When the DCI is not received or not decoded, configuration information of a physical uplink resource or uplink scheduling information may not be received. For example, when there is no DCI to be decoded, this may indicate the absence of configuration information of an uplink resource or uplink scheduling information. Accordingly, when a strength of a signal transmitted through the NUL carrier does not exceed a threshold value during use of the NUL carrier while data transaction is being performed, the user terminal may not receive configuration information of a physical uplink resource or uplink scheduling information.

When the configuration information of the physical uplink resource or uplink scheduling information is received (No in operation 1220), operation 1220 may be performed again. For example, the user terminal may continuously monitor a condition for occurrence of communication interruption.

When the configuration information of the physical uplink resource or uplink scheduling information is not received for the predetermined period time (Yes in operation 1220), the user terminal may identify whether configuration information (for example, a configuration parameter) of a SUL carrier or resource operating in an unlicensed band is received in operation 1230. For example, the user terminal may identify whether configuration information of a SUL carrier or resource operating in an unlicensed band has been previously received from a cell. When the configuration information of the SUL carrier or resource operating in the unlicensed band is not received (No in operation 1230), the process may be finished.

When the configuration information of the SUL carrier or resource operating in the unlicensed band is received (Yes in operation 1230), the user terminal may identify whether a physical downlink resource is received for the predetermined period time in operation 1240. When the physical downlink resource is not received for the predetermined period time (No in operation 1240), the process may be finished.

When the physical downlink resource is received for the predetermined period time (Yes in operation 1240), the user terminal may identify whether a SUL carrier is prepared in operation 1250. For example, the user terminal may identify whether it is possible to access through a SUL carrier. Whether it is possible to access by the SUL carrier may be identified by performing a listen before talk (LBT) procedure. The LBT may be for an unlicensed band and a device using the LBT may listen to a wireless channel, and may transmit data only when the channel is in an idle state (for example, a state in which there is no transmission identified by another device). When the channel is not in the idle state, the device may listen to a channel after waiting for a certain period time. In the case of a RACH procedure using an unlicensed band, all of the user terminal and the network may perform the LBT procedure before transmitting data. However, the RACH procedure using the unlicensed band may be mostly the same as a RACH procedure using a licensed band, except that the LBT procedure is performed.

When the SUL carrier is not prepared (No in operation 1250), the process may be finished. When the SUL carrier is prepared (Yes in operation 1250), the user terminal may set an uplink carrier to the SUL carrier and may perform a RACH procedure by using the SUL carrier in operation 1260.

According to an embodiment as described above, a method for enhancing communication interruption by using SUL in a wireless communication system may include: registering a user terminal at a cell by using a NUL carrier; receiving configuration information of a SUL carrier from the cell; identifying whether uplink configuration information on the NUL carrier is not received for a predetermined period time; when the uplink configuration information on the NUL carrier is not received for the predetermined period time, setting the SUL carrier to be used as an uplink carrier; and performing a random access channel (RACH) procedure by using the SUL carrier.

According to various embodiments, the method may further include identifying whether a downlink resource is received for the predetermined period time, and setting the SUL carrier to be used as the uplink carrier may include, when the downlink resource is received but the uplink configuration information on the NUL carrier is not received for the predetermined period time, setting the SUL carrier to be used as the uplink carrier.

According to various embodiments, identifying whether the uplink configuration information on the NUL carrier is not received may include: monitoring a PDCCH search space; and, when DCI is not received, identifying that the uplink configuration information is not received.

According to various embodiments, the method may further include identifying the predetermined period time based on at least one of requirements of a delay application or distribution of software in a network.

According to various embodiments, the method may further include: identifying whether the RACH procedure using the SUL carrier fails; and, in response to identifying that the RACH procedure using the SUL carrier fails, performing a RRE procedure.

According to various embodiments, the user terminal may operate in a 5G radio access technology (RAT), and may operate in a standalone (SA) method, a non-standalone (NSA) method, a NR carrier aggregation (NRCA) method, or a multi-RAT dual connectivity with NR carrier aggregation (MRDC-NRCA) method.

According to various embodiments, the SUL carrier may operate in a licensed band or an unlicensed band.

According to various embodiments, the method may further include, when the SUL carrier operates in the unlicensed band, identifying whether it is possible to access by the SUL carrier through a LBT procedure.

According to various embodiments as described above, a method for enhancing communication interruption by using SUL in a wireless communication system may include: performing a data transaction through an LTE path and a 5G path; identifying whether uplink configuration information on a NUL carrier is not received through the 5G path for a predetermined period time; when the uplink configuration information on the NUL carrier is not received through the 5G path for the predetermined period time, setting a SUL carrier to be used as an uplink carrier, based on configuration information of the SUL carrier which is received from a 5G serving cell; and performing a RACH procedure by using the SUL carrier.

According to various embodiments, the method may further include, when the configuration information of the SUL carrier is not received from the 5G serving cell, performing an uplink data transaction through the LTE path.

According to various embodiments as described above, an apparatus for enhancing communication interruption by using SUL in a wireless communication system may include: a transceiver; and at least one processor operatively connected with the transceiver. The at least one processor may register a user terminal at a cell by using a NUL carrier, may receive configuration information of a SUL carrier from the cell, may identify whether uplink configuration information on the NUL carrier is not received for a predetermined period time, when the uplink configuration information on the NUL carrier is not received for the predetermined period time, may set the SUL carrier to be used as an uplink carrier, and may perform a RACH procedure by using the SUL carrier.

According to various embodiments, the at least one processor may identify whether a downlink resource is received for the predetermined period time, and, when the downlink resource is received but the uplink configuration information on the NUL carrier is not received for the predetermined period time, may set the SUL carrier to be used as the uplink carrier.

According to various embodiments, the at least one processor may monitor a PDCCH search space, and, when DCI is not received, may identify that the uplink configuration information is not received.

According to various embodiments, the at least one processor may identify the predetermined period time based on at least one of requirements of a delay application or distribution of software in a network.

According to various embodiments, the at least one processor may identify whether the RACH procedure using the SUL carrier fails, and, in response to identifying that the RACH procedure using the SUL carrier fails, may perform a RRE procedure.

According to various embodiments, the user terminal may operate in a 5G radio access technology (RAT), and may operate in a standalone (SA) method, a non-standalone (NSA) method, a NR carrier aggregation (NRCA) method, or a multi-RAT dual connectivity with NR carrier aggregation (MRDC-NRCA) method.

According to various embodiments, the SUL carrier may operate in a licensed band or an unlicensed band.

According to various embodiments, the at least one processor may, when the SUL carrier operates in the unlicensed band, identify whether it is possible to access by the SUL carrier through a listen before talk (LBT) procedure.

According to various embodiments described above, an apparatus for enhancing communication interruption by using SUL in a wireless communication system may include: a transceiver; and at least one processor operatively connected with the transceiver. The at least one processor may perform a data transaction through an LTE path and a 5G path, my identify whether uplink configuration information on a NUL carrier is not received through the 5G path for a predetermined period time, when the uplink configuration information on the NUL carrier is not received through the 5G path for the predetermined period time, may set a SUL carrier to be used as an uplink carrier, based on configuration information of the SUL carrier which is received from a 5G serving cell, and may perform a RACH procedure by using the SUL carrier.

According to various embodiments, the at least one processor may, when the configuration information of the SUL carrier is not received from the 5G serving cell, perform an uplink data transaction through the LTE path.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A method for enhancing communication interruption by using supplementary uplink (SUL) in a wireless communication system, the method comprising:
registering a user terminal at a cell by using a normal uplink (NUL) carrier;
receiving configuration information of a supplementary uplink (SUL) carrier from the cell;
identifying whether uplink configuration information on the NUL carrier is not received for a predetermined period time;
when the uplink configuration information on the NUL carrier is not received for the predetermined period time, setting the SUL carrier to be used as an uplink carrier; and
performing a random access channel (RACH) procedure by using the SUL carrier.

2. The method of claim 1, further comprising identifying whether a downlink resource is received for the predetermined period time,
wherein setting the SUL carrier to be used as the uplink carrier comprises, when the downlink resource is received but the uplink configuration information on the NUL carrier is not received for the predetermined period time, setting the SUL carrier to be used as the uplink carrier.

3. The method of claim 1, wherein identifying whether the uplink configuration information on the NUL carrier is not received comprises:
monitoring a physical downlink control channel (PDCCH) search space; and
when downlink control information (DCI) is not received, identifying that the uplink configuration information is not received.

4. The method of claim 1, further comprising identifying the predetermined period time based on at least one of requirements of a delay application or distribution of software in a network.

5. The method of claim 1, further comprising:
identifying whether the RACH procedure using the SUL carrier fails; and
in response to identifying that the RACH procedure using the SUL carrier fails, performing a RRC connection reestablishment (RRE) procedure.

6. The method of claim 1, wherein the user terminal operates in a 5G radio access technology (RAT), and an operation method of the user terminal is one of a standalone (SA) method, a non-standalone (NSA) method, a non-standalone with NR carrier aggregation (NRCA) method, or a multi-RAT dual connectivity with NR carrier aggregation (MRDC-NRCA) method.

7. A method for enhancing communication interruption by using supplementary uplink (SUL) in a wireless communication system, the method comprising:
performing a data transaction through an LTE path and a 5G path;
identifying whether uplink configuration information on a normal uplink (NUL) carrier is not received through the 5G path for a predetermined period time;
when the uplink configuration information on the NUL carrier is not received through the 5G path for the predetermined period time, setting a SUL carrier to be used as an uplink carrier, based on configuration information of the SUL carrier which is received from a 5G serving cell; and
performing a random access channel (RACH) procedure by using the SUL carrier.

8. The method of claim 7, further comprising, when the configuration information of the SUL carrier is not received from the 5G serving cell, performing an uplink data transaction through the LTE path.

9. An apparatus for enhancing communication interruption by using supplementary uplink (SUL) in a wireless communication system, the apparatus comprising:
a transceiver; and
at least one processor operatively connected with the transceiver,
wherein the at least one processor is configured to:
register a user terminal at a cell by using a normal uplink (NUL) carrier;
receive configuration information of a supplementary uplink (SUL) carrier from the cell;
identify whether uplink configuration information on the NUL carrier is not received for a predetermined period time;
when the uplink configuration information on the NUL carrier is not received for the predetermined period time, set the SUL carrier to be used as an uplink carrier; and
perform a random access channel (RACH) procedure by using the SUL carrier.

10. The apparatus of claim 9, wherein the at least one processor is configured to identify whether a downlink resource is received for the predetermined period time, and, when the downlink resource is received but the uplink configuration information on the NUL carrier is not received for the predetermined period time, set the SUL carrier to be used as the uplink carrier.

11. The apparatus of claim 9, wherein the at least one processor is configured to:
monitor a physical downlink control channel (PDCCH) search space; and
when downlink control information (DCI) is not received, identify that the uplink configuration information is not received.

12. The apparatus of claim 9, wherein the at least one processor is configured to identify the predetermined period time based on at least one of requirements of a delay application or distribution of software in a network.

13. The apparatus of claim 9, wherein the at least one processor is configured to:
identify whether the RACH procedure using the SUL carrier fails; and
in response to identifying that the RACH procedure using the SUL carrier fails, perform a RRC connection reestablishment (RRE) procedure.

14. The apparatus of claim 9, wherein the user terminal operates in a 5G radio access technology (RAT), and an operation method of the user terminal is one of a standalone (SA) method, a non-standalone (NSA) method, a non-standalone with NR carrier aggregation (NRCA) method, or a multi-RAT dual connectivity with NR carrier aggregation (MRDC-NRCA) method.

15. An apparatus for enhancing communication interruption by using supplementary uplink (SUL) in a wireless communication system, the apparatus comprising:
a transceiver; and
at least one processor operatively connected with the transceiver,
wherein the at least one processor is configured to:
perform a data transaction through an LTE path and a 5G path;
identify whether uplink configuration information on a normal uplink (NUL) carrier is not received through the 5G path for a predetermined period time;
when the uplink configuration information on the NUL carrier is not received through the 5G path for the predetermined period time, set a SUL carrier to be used as an uplink carrier, based on configuration information of the SUL carrier which is received from a 5G serving cell; and
perform a random access channel (RACH) procedure by using the SUL carrier.
